# EUROPÄISCHE PATENTSCHRIFT

(11) **EP 4 219 124 B1**
(45) Veröffentlichungstag und Bekanntmachung des Hinweises auf die Patenterteilung: **02.10.2024**
(21) Anmeldenummer: 22154626.0
(22) Anmeldetag: 01.02.2022
(51) Int. Cl.: B29C 51/20, B29C 51/24, B29C 51/42, B29C 51/10, B29C 51/26, B29K 29/00, B29L 31/00

(54) **FOLIENTRANSPORTPLATTE UND FOLIENTRANSPORTSYSTEM**
FILM TRANSPORT PANEL AND FILM TRANSPORT SYSTEM
PLAQUE DE TRANSPORT DE FEUILLE ET SYSTÈME DE TRANSPORT DE FEUILLE

(43) Veröffentlichungstag der Anmeldung: 02.08.2023
(73) Patentinhaber: Harro Höfliger Verpackungsmaschinen GmbH, 71573 Allmersbach im Tal (DE)
(72) Erfinder: Thienst, Andreas, 71573 Allmersbach im Tal (DE); Birkhold, Daniel, 71573 Allmersbach im Tal (DE)
(74) Vertreter: Zurhorst, Stefan

(56) Entgegenhaltungen:
- EP-A1- 1 375 351
- EP-A1- 3 875 246
- DE-A1- 102007 042 064
- DE-A1- 2 030 006

## Beschreibung

Die Erfindung betrifft eine Folientransportplatte mit den Merkmalen nach dem Oberbegriff des Anspruchs 1 sowie ein Folientransportsystem mit einer solchen Folientransportplatte. Gattungsgemäße Folientransportpatten sind in den Patentschriften EP3875246A1, EP1375351A1, DE102007042064A1 und DE2030006A1 beschrieben.

In verbreiteter Ausführung werden Verpackungseinheiten häufig dadurch hergestellt, dass zunächst Folien tiefgezogen werden. In die hierbei entstehenden Kavitäten wird ein Produkt eingefüllt, woran anschließend eine Versiegelung mit einer Deckfolie erfolgt. Es entsteht ein doppellagiger Folienstreifen, in dem Teilmengen des Produktes voneinander abgegrenzt sind. Diese Teilmengen werden abschließend in einer Schneidstation vereinzelt.

Insbesondere im Haushaltsbereich werden in vorgenannter Weise Einzeldosen von Wasch- oder Spülmittel mittels zweier Bahnen von wasserlöslicher Folie verpackt. Für die industrielle Massenfertigung kommen Verpackungsmaschinen in einem kontinuierlichen, nicht getakteten Betrieb zum Einsatz, wie sie beispielsweise aus der EP 3 875 246 A1 bekannt sind. Hierbei läuft ein Transporteur in Form einer Kette kontinuierlich um ein feststehendes Maschinengestell um, wobei der Transporteur auf der oberen Bearbeitungsseite eine geradlinige, horizontale Wegstrecke zurücklegt. Gemeinsam mit dem Transporteur werden Transportplatten mit sogenannten Formatplatten kontinuierlich umlaufend mitbewegt. Synchron zur Bewegung der Formatplatten wird eine erste Folienbahn kontinuierlich zugeführt und auf die Oberseite der Transportplatten aufgelegt und mit diesen von Station zu Station mitbewegt. In den Formatplatten sind mehrere Formmulden ausgeformt, in welche die Folienbahn nach thermischer Plastifizierung tiefgezogen wird. Die so in der Folienbahn entstehenden Kavitäten bleiben durch die Formmulden gestützt und werden in einer nachfolgenden Füllstation mit dem gewünschten Produkt befüllt. Im weiteren Verlauf wird eine weitere Folienbahn als Deckfolie zugeführt und aufgesiegelt, so dass voneinander getrennte Einzelmengen des Produktes in einer zusammenhängenden Beutelbahn entstehen. Aus dieser Beutelbahn werden schließlich Einzelverpackungen ausgeschnitten.

Eine hierbei zu lösende Teilaufgabe besteht darin, die erste Folienbahn so auf den Transportplatten zu fixieren, dass sie zuverlässig gehalten wird und dennoch sich beim Tiefziehen frei verformen lässt. Hierzu sind an den beiden Seitenrändern der Transportplatten Haltemittel für die Folienbahn angeordnet, mit welchen die Randbereiche der Folienbahn auf die Transportplatten geklemmt werden, während der Mittenbereich der Folienbahn lose aufliegt und tiefgezogen werden kann. Die seitliche Klemmung stellt eine gleichmäßige plastische Verformung der Folienbahn beim Tiefziehen sicher, ohne dass die Folienränder nach innen gezogen werden. In der Regel erfolgt die Klemmung mittels zweier beidseitig der Transportplatten umlaufender Rundriemen, welche zusammen mit dem jeweiligen Randbereich der Folienbahn in seitliche Riemenaufnahmen der Transportplatten gedrückt werden. Damit die Folienbahn sicher geklemmt werden kann, muss der Querschnitt des Rundriemens mindestens zu 180° von der Folienbahn umschlungen werden. Um dies zu erreichen, muss von der verfügbaren Folienbreite ein beträchtlicher Anteil für die Klemmung reserviert werden, welcher für den eigentlichen Vorgang des Tiefziehens und Verpackens nicht genutzt werden kann. Die effektiv nutzbare Breite der Folienbahn ist entsprechend verringert, was mit einem zugehörigen Abfallaufkommen und mit zugehörigen Kosten einhergeht.

Darüber hinaus können bei den eingesetzten Rundriemen bestimmte Betriebsstörungen nicht ausgeschlossen werden. Die Riemen neigen zur Dehnung, was zum Herausspringen aus der Riemenführung führen kann. Die Dehnung zieht auch eine Verringerung der Haltekraft nach sich, was Störungen insbesondere beim Tiefziehen zur Folge hat. Es kann auch zu einem Riemenriss kommen.

Der Erfindung liegt die Aufgabe zugrunde, eine gattungsgemäße Folientransportplatte derart weiterzubilden, dass eine verbesserte seitliche Klemmung der Folienbahn möglich ist.

Diese Aufgabe wird durch eine Folientransportplatte mit den Merkmalen des Anspruchs 1 gelöst.

Der Erfindung liegt des Weiteren die Aufgabe zugrunde, ein Folientransportsystem anzugeben, welches eine Kantenhalterung der Folienbahn mit verbesserter Betriebssicherheit ermöglicht.

Diese Aufgabe wird durch ein Folientransportsystem mit den Merkmalen des Anspruchs 8 gelöst.

Nach der Erfindung ist vorgesehen, dass die Haltemittel an den beiden Seitenrändern der Folientransportplatte durch je eine feststehende Klemmfläche und mindestens eine bewegliche Klemmbacke zum klemmenden Andrücken der Folienbahn an die Klemmfläche gebildet sind. Dabei weisen die Haltemittel des Weiteren jeweils mindestens einen Haltemagnet zum Anziehen der Klemmbacke gegen die Klemmfläche sowie einen Betätigungsfortsatz zum Abheben der Klemmbacke von der Klemmfläche auf. Das ebenfalls erfindungsgemäße Folientransportsystem umfasst zusätzlich noch feststehende, also nicht mit den Folientransportplatten umlaufende Betätigungsmittel, welche auf die Betätigungsfortsätze der Klemmbacken einwirken.

Die Klemmbacken erlauben in Verbindung mit der magnetischen Haltekraft eine zuverlässige Halterung der Folienbahn auf einer insbesondere ebenen Klemmfläche, ohne dass eine materialintensive Umschlingung eines Riemenquerschnittes erforderlich ist. Für eine sichere Folienfixierung ist nur ein sehr schmaler Klemmbereich erforderlich, in welchem ein ebenso schmaler Randstreifen der Folienbahn gehalten wird. Damit steht anteilig mehr Breite der Folienbahn für die Ausformung von Verpackungskavitäten zur Verfügung. Es entstehen mehr Freiheiten bei der geometrischen Ausgestaltung und Verteilung der Kavitäten. Die erzielbare Erhöhung der Ausbringungsmenge führt zu einer anteiligen Reduktion der Maschinen- und Betriebskosten bezogen auf die einzelnen Produkte. Die reduzierten Randstreifen ziehen verringerten Folienabfall nach sich. Die Mechanik der Klemmbacken ist zuverlässiger bei geringerem Störungsaufkommen. Außerdem sind die erzielbaren Haltekräfte größer bei einer gesteigerten Gleichmäßigkeit der Kraftverteilung im Vergleich zum Rundriemen.

Die Klemmbacken können in einer Linearbewegung geöffnet und geschlossen werden. In einer bevorzugten Ausgestaltung sind die Klemmbacken um Schwenkachsen schwenkbar gelagert, wobei die Schwenkachsen parallel zu den Seitenrändern der Folientransportplatte liegen. Hierdurch entsteht bei geringem Bauvolumen eine präzise, spielfreie und einfache Bewegungsmechanik, welche störungsfrei Klemmkräfte aufbringt und bei Bedarf auch wieder löst.

Es kann zweckmäßig sein, den Betätigungsfortsatz als Dorn oder dergleichen auszubilden und gleitend zu führen. Bevorzugt ist der Betätigungsfortsatz mit einer Anlaufrolle versehen. Hierdurch können in Folge einer Abrollbewegung hohe Betätigungskräfte bei geringem Verschleiß in die bewegten Klemmbacken eingeleitet werden.

In zweckmäßiger Weiterbildung der Erfindung sind an jedem Seitenrand einer einzelnen Folientransportplatte mehrere und insbesondere vier Klemmbacken angeordnet. Durch die auf diese Weise gebildeten möglichst schmalen Klemmbacken wird gewährleistet, dass nur ein kleiner, von wenigen Klemmbacken abgedeckter Bereich geöffnet werden muss, um die Folienbahn auf die Platten aufzulegen. Dadurch gibt es nur einen kleinen Bereich, in dem die Folienbahn frei und unfixiert ist.

Es kann vorteilhaft sein, einen oder mehrere Haltemagnete an den Klemmbacken anzuordnen. Bevorzugt ist jedoch der mindestens eine Haltemagnet in der Klemmfläche positioniert. Auf diese Weise können die einzelnen Klemmbacken einfach und leicht gestaltet sein, so dass sie ohne mechanische Rücksichtnahmen mit hoher Zyklusgeschwindigkeit geöffnet und wieder geschlossen werden können.

In einer bevorzugten Ausführungsform sind in der Klemmfläche Saugöffnungen zum Ansaugen der Folienbahn gegen die Klemmfläche ausgebildet. Dort, wo entlang der Bewegungsbahn der Transportplatten ein Unterdruck verfügbar ist, kann hiermit die Haltekraft an den Rändern der Folienbahn signifikant erhöht werden, so dass nicht allein die Magnetkraft für die Fixierung herangezogen werden muss. Insbesondere im Bereich der Tiefziehstation, wo infolge des Tiefziehvorgangs die höchsten Kräfte auf die Folie einwirken, kann eine hochbelastbare Folienfixierung erzielt werden. Aber auch in nachfolgenden Stationen wie beispielsweise in der Füllstation, wo ein zwar geringeres, aber doch vorhandenes Vakuum auf die Folienbahn einwirkt, kann mittels der Saugöffnungen die Haltekraft erhöht werden.

In zusätzlicher Ergänzung kann es noch zweckmäßig sein, dass jeder Klemmbacke mindestens eine Schließfeder zugeordnet ist, wobei die Klemmbacke mittels der Schließfeder elastisch federnd gegen die Klemmfläche gedrückt ist. Die Schließfedern erhöhen nicht nur den Anpressdruck und damit die Haltekraft. Sie können auch ein selbsttätiges Schließen der Klemmbacken aus ihrer vollständig geöffneten Position bewirken, ohne dass ein eigenständiger Schließantrieb zwingend erforderlich ist.

Als Betätigungsmittel der Klemmbacken kommen verschiedene Konzepte in Betracht. Bevorzugt sind die Betätigungsmittel als Kulisse ausgebildet, welche die Betätigungsfortsätze führt, und wobei die Kulisse zumindest einen die Klemmbacke von der Klemmfläche abhebenden Öffnungsabschnitt umfasst. Die Kulisse wirkt also mit ihrem Öffnungsabschnitt derart auf den darin laufenden Betätigungsfortsatz ein, dass die Klemmbacke gegen die Haftkraft des Haltemagneten und gegebenenfalls auch gegen die Vorspannkraft der Schließfeder angehoben bzw. aufgeschwenkt wird. Das nachfolgende Schließen der Klemmbacke kann dann ohne Einfluss der Kulisse durch die Schließfeder herbeigeführt werden. Alternativ oder zusätzlich ist in vorteilhafter Weiterbildung vorgesehen, dass die Kulisse einen die Klemmbacke auf die Klemmfläche führenden Schließabschnitt umfasst. Dieser bewirkt dann - mit oder ohne Schließfeder - ein zwangsgesteuertes Schließen der Klemmbacke. Insgesamt ist bei einfachem konstruktivem Aufbau ein zuverlässiger Betätigungsmechanismus gefunden.

Ein Ausführungsbeispiel der Erfindung ist nachfolgend anhand der Zeichnung näher beschrieben. Es zeigen:
- Fig. 1: in einer seitlichen Ausschnittsdarstellung eine erfindungsgemäß ausgeführte Verpackungsmaschine mit kontinuierlich umlaufend bewegten Folientransportplatten sowie mit zyklisch mitbewegten Form-, Füll- und Siegelstationen,
- Fig. 2: in einer perspektivischen Einzelteildarstellung eine Folientransportplatte nach Fig. 1 mit an deren Seitenrändern angeordneten, hier geöffneten Klemmbacken,
- Fig. 3: in einer vergrößerten Detaildarstellung einen Randbereich der Folientransportplatte nach Fig. 2 mit einer Klemmfläche, mit Haltemagneten und Saugöffnungen in der Klemmfläche, und mit einer einzelnen Klemmbacke,
- Fig. 4: in einer Schnittdarstellung die Anordnung nach Fig. 3 mit einer auf die Klemmbacke in Schließrichtung einwirkenden Schließfeder,
- Fig. 5: die Anordnung nach Fig. 2 mit geschlossenen Klemmbacken,
- Fig. 6: in einer perspektivischen Funktionsdarstellung die Folientransportplatte nach den Figuren 2 bis 5 mit geschlossenen Klemmbacken beim Einlaufen in eine Anordnung von Kulissen zur Klemmbackenbetätigung,
- Fig. 7: die Anordnung nach Fig. 6 mit durch die Kulissen geöffneten Klemmbacken, und
- Fig. 8: die Anordnung nach den Figuren 6, 7 beim Auslaufen aus den Kulissen und mit sich schließenden Klemmbacken.

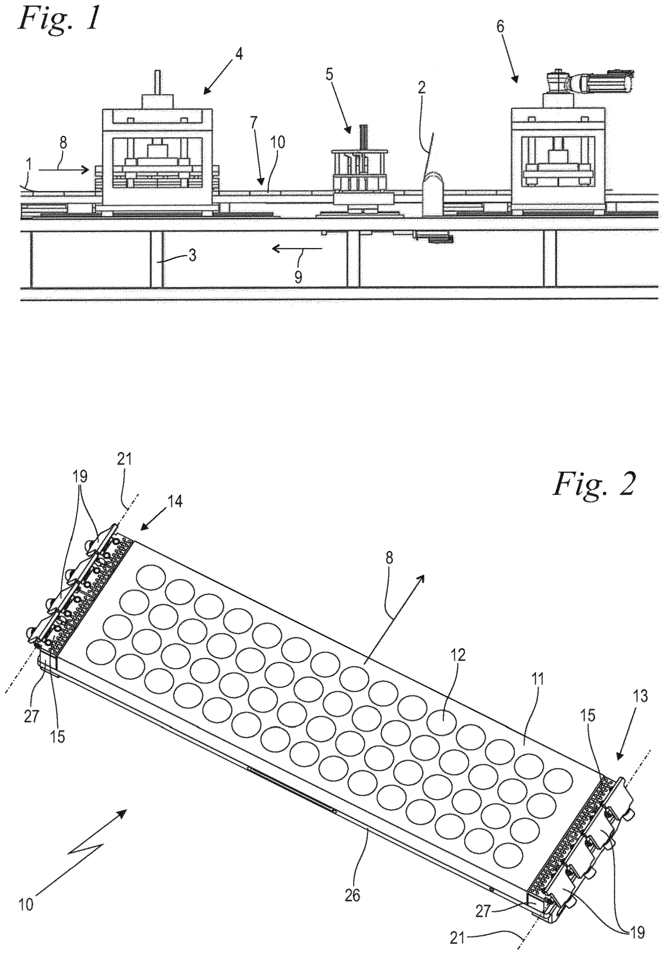

Fig. 1 zeigt in einer Seitenansicht einen Ausschnitt aus einer erfindungsgemäßen Verpackungsmaschine zur Herstellung von gefüllten Beuteln. Hierzu umfasst die Verpackungsmaschine ein Maschinengestell 3, eine Formstation 4, eine Füllstation 5 und eine Siegelstation 6. Eine Folienbahn 1 wird der Verpackungsmaschine zugeführt und in der Formstation 4 tiefgezogen, so dass sich in der Folienbahn 1 Kavitäten ausbilden. Diese Kavitäten werden in der Füllstation 5 mit einem Produkt befüllt. Hieran anschließend wird eine Deckfolie 2 zugeführt und in der Siegelstation 6 auf die Folienbahn 1 aufgesiegelt, wobei die befüllten Kavitäten verschlossen werden. In einer nicht dargestellten Schneidestation wird die solchermaßen gebildete Folieneinheit zu Folienbeuteln vereinzelt. Im Ausführungsbeispiel handelt es sich bei der Folienbahn 1 und bei der Deckfolie 2 um wasserlösliche Folien, namentlich um PVOH-Folien, zwischen denen ein Wasch- oder Reinigungsmittel verpackt wird. Solchermaßen hergestellte gefüllte Folienbeutel werden beispielsweise in eine Spülmaschine eingelegt. Dort löst sich das Folienmaterial bei Wasserkontakt auf und gibt das enthaltene Spülmittel frei. Sinngemäß das Gleiche gilt für den Einsatz eines solchen Folienbeutels in einer Waschmaschine.

Die Verpackungsmaschine umfasst neben dem ortsfest montierten Maschinengestell 3 einen kontinuierlich angetriebenen Transporteur 7. Der Transporteur 7 ist durch gelenkig und kettenartig miteinander verbundene Folientransportplatten 10 gebildet, auf denen weiter unten näher beschriebene Formatplatten 11 (Fig. 2) mit Formmulden 12 montiert sind. Letztere werden zusammen mit dem Transporteur 3 kontinuierlich und um das Maschinengestell 3 umlaufend angetrieben, wobei sie sich für den eigentlichen Herstellvorgang der Beutel auf einer oberen horizontalen Bahn entsprechend einem Pfeil 8 bewegen und nach entsprechender Umlenkung anschließend im unteren Bereich des Maschinengestells 3 entsprechend einem Pfeil 9 zurückgeführt werden. Ebenso kontinuierlich wird die endlose Folienbahn 1 zugeführt und von oben auf den Transporteur 7 mit den Folientransportplatten 10 aufgelegt. Zwischen der Füllstation 5 und der Siegelstation 6 wird später noch die Deckfolie 2 kontinuierlich zugeführt und von oben auf die Oberseite der Folienbahn 1 aufgelegt. Die Folienbahn 1 und die Deckfolie 2 werden im aufgelegten Zustand entsprechend dem Pfeil 8 synchron und kontinuierlich mit dem Transporteur 7 mitbewegt.

Fig. 2 zeigt in einer perspektivischen Einzelteildarstellung eine einzelne Folientransportplatte 10 nach Fig. 1, wobei hier zur Orientierung der Pfeil 8 für die Bewegungsrichtung in der Verpackungsmaschine nach Fig. 1 eingetragen ist. Die Folientransportplatte 10 umfasst eine Basisplatte 26, auf der die oben schon erwähnte Formatplatte 11 mit einer bestimmten Anzahl von Formmulden 12 aufgesetzt und befestigt ist. Seitenränder 13, 14 der Folientransportplatte liegen sich bezogen auf die Bewegungsrichtung nach dem Pfeil 8 seitlich gegenüber und erstrecken sich parallel zu dieser. Im Bereich der Seitenränder 13, 14 ist die Formatplatte 11 seitlich durch Formteile 27 eingefasst, auf deren Oberseite ebene Klemmflächen 15 ausgebildet sind. Die Klemmflächen 15 liegen flächenbündig mit der Oberfläche der Formatplatte 11.

An beiden Seitenrändern 13, 14 ist die Folientransportplatte 10 mit jeweils mindestens einer Klemmbacke 19 versehen. Im gezeigten bevorzugten Ausführungsbeispiel weist die Folientransportplatte 10 an beiden Seitenrändern 13, 14 mehrere, hier jeweils vier Klemmbacken 19 auf. Die Klemmbacken 19 sind relativ zu den Klemmflächen 15 beweglich und vorliegend im geöffneten Zustand dargestellt. Hierzu sind die Klemmflächen 15 feststehend an den Seitenrändern 13, 14 ausgebildet, während die Klemmbacken 19 um parallel zur Bewegungsrichtung 8 verlaufende Schwenkachsen 21 schwenkbar sind. Mit der feststehenden Ausgestaltung der Klemmflächen 15 ist gemeint, dass diese keine Relativbewegung zur Folientransportplatte 10 ausüben, und lediglich gemeinsam mit dieser eine Bewegung entsprechend dem Pfeil 8 erfahren. Es kann aber auch zweckmäßig sein, dass die Klemmflächen 15 beweglich ausgeführt sind. Wichtig ist vor allem, dass eine Relativbewegung zwischen Klemmbacken 19 und Klemmflächen 15 stattfinden kann. Zusätzlich oder alternativ zur genannten Schwenkbeweglichkeit der Klemmbacken kann auch eine translatorische Beweglichkeit zweckmäßig sein.

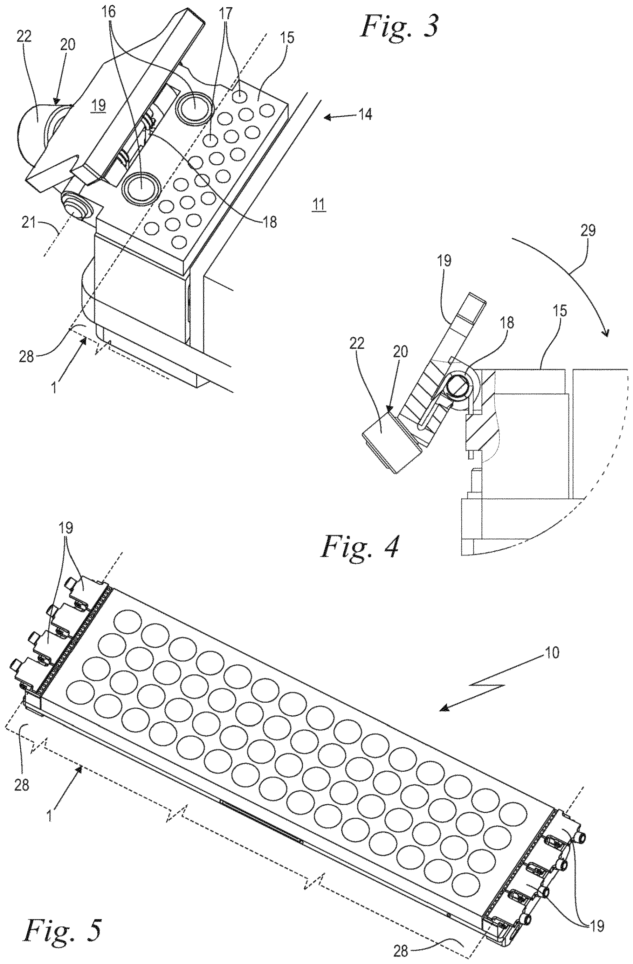

Fig. 3 zeigt in einer vergrößerten Detaildarstellung einen Randabschnitt der Folientransportplatte 10 nach Fig. 2 im Bereich einer einzelnen Klemmbacke 19 und des zugehörigen Abschnittes der Klemmfläche 15. In der Klemmfläche 15 ist mindestens ein Haltemagnet 16 zum Anziehen der Klemmbacke 19 gegen die Klemmfläche 15 integriert. Im gezeigten Ausführungsbeispiel handelt es sich für jede Klemmbacke 19 um jeweils zwei Haltemagnete 16. Außerdem sind in die Klemmfläche 15 im unmittelbar an die Formatplatte 11 angrenzenden Randbereich Saugöffnungen 17 eingebracht, welche bei Bedarf mit einer Saugquelle verbunden werden können. Optional ist zusätzlich noch eine Schließfeder 18 vorgesehen, welche gemäß der ergänzenden Schnittdarstellung nach Fig. 4 als Schenkelfeder ausgebildet ist und auf die Klemmbacke 19 derart einwirkt, dass diese entsprechend einem Pfeil 29 elastisch federnd zur Klemmfläche 15 hin vorgespannt und dagegen gedrückt wird. Schließlich ist der Zusammenschau der Figuren 3, 4 noch entnehmbar, dass jede Klemmbacke 19 mit einem Betätigungsfortsatz 20 versehen ist, welcher seitlich über den jeweiligen Seitenrand 13, 14 hervorsteht und für die Betätigung der Klemmbacke 19 vorgesehen ist. Jeder Betätigungsfortsatz 20 trägt je eine Anlaufrolle 22.

Fig. 5 zeigt noch die Anordnung nach Fig. 2 mit geschlossenen Klemmbacken 19, welche hier auf den zugeordneten Klemmflächen 15 unter Zwischenlage von Randabschnitten 28 der nur angedeuteten Folienbahn 1 aufliegen.

Aus der Zusammenschau der Figuren 3 und 5 ergibt sich die Funktionsweise der Folienklemmung wie folgt: Bei geöffneten Klemmbacken 19 nach den Figuren 2, 3 kann die Folienbahn 1 auf die Folientransportplatte 10 aufgelegt werden, wobei sie die Formatplatte 11 mit den Formmulden 12 abdeckt. Die Randabschnitte 28 der Folienbahn 1 kommen beidseitig auf den Klemmflächen 15 zu liegen. Danach werden die Klemmbacken 19 gemäß Fig. 5 geschlossen, wobei sie die Randabschnitte 28 der Folienbahn 1 zwischen sich und den Klemmflächen 15 einklemmen. Die Klemmkraft wird durch die Haltemagnete 16 erzeugt und kann optional durch die Schließfedern ergänzt werden. Insgesamt sind hierdurch Haltemittel gebildet, mittels derer die Folienbahn 1 zuverlässig an der jeweiligen Folientransportplatte 10 fixiert ist und gemeinsam mit dieser durch die verschiedenen Bearbeitungsstationen 4, 5, 6 (Fig. 1) transportiert wird. Bei erhöhtem Bedarf an Haltekraft beispielsweise im Bereich der Formstation 4 (Fig. 1), in welcher die Folienbahn den Kräften des Tiefzieh-Unterdrucks ausgesetzt ist, werden ergänzend die Saugöffnungen 17 (Fig. 3) mit Unterdruck beaufschlagt. Infolge der Ansaugung durch die Saugöffnungen 17 werden die Randabschnitte 28 der Folienbahn 1 zusätzlich gegen die jeweilige Klemmfläche gepresst bzw. gesogen, was zur Erhöhung der Haltekraft beiträgt. Der durch die Saugöffnungen 17 an den Klemmflächen 15 bereitgestellte Unterdruck kann auch anteilig auf die Klemmbacken 19 wirken und damit zur Erhöhung ihrer Schließkraft beitragen.

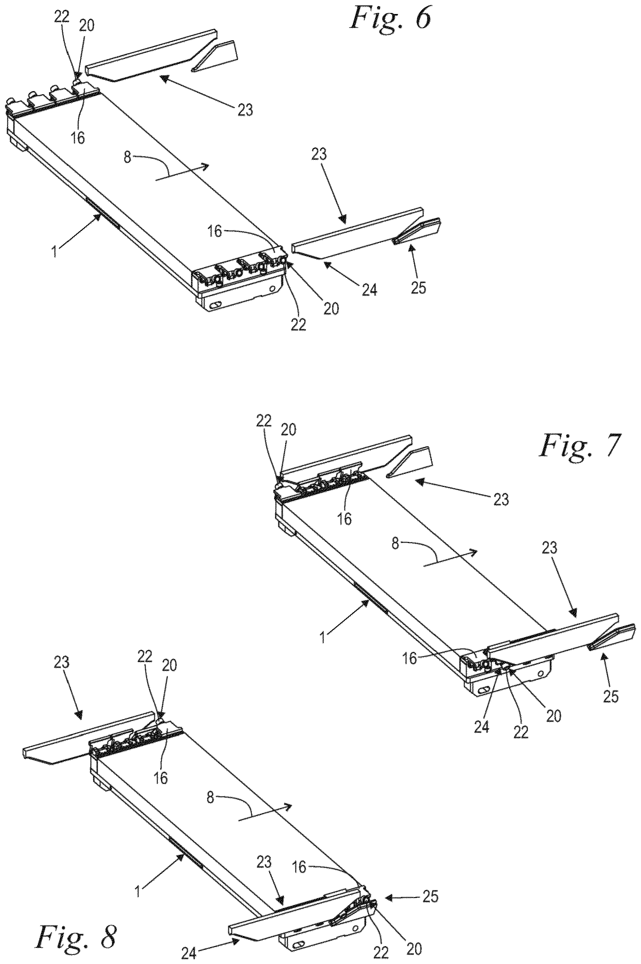

Die kinematische Betätigung der Klemmbacken 19 ergibt sich aus den Phasenbildern nach den Figuren 6 bis 8, in denen die Folientransportplatte 10 nach den Figuren 2 bis 5 in verschiedenen Phasen des Öffnens und Schließens dargestellt ist. Die Folientransportplatte 10 bildet hierfür zusammen mit feststehenden, auf die Betätigungsfortsätze 20 der Klemmbacken 19 einwirkenden Betätigungsmittel ein erfindungsgemäßes Folientransportsystem, welches nachfolgend näher beschrieben wird:
Seitlich am Maschinengestell 3 (Fig. 1), welches zur besseren Übersicht in den Figuren 6 bis 8 nicht dargestellt ist, ist jeweils eine Kulisse 23 fest montiert. Mit anderen Worten bewege sich die Kulissen 23 nicht mit den Folientransportplatten 10 entsprechend dem Pfeil 8 mit. Infolge der genannten Bewegung der Folientransportplatten 10 werden die Betätigungsfortsätze 20 der Klemmbacken 19 mit ihren Anlaufrollen 22 sukzessive in die Kulissen 23 eingeführt.

Gemäß Fig. 6 befindet sich die Folientransportplatte 10 kurz vor ihrem Einlauf in die Kulissen 23, welche noch nicht auf die Betätigungsfortsätze 20 der Klemmbacken 19 einwirken. Folglich sind die Klemmbacken 19 in ihrem geschlossenen Ruhezustand gemäß Fig. 5, in welchem sie aufgrund der wirkenden Magnet- und Federkräfte gegen die Klemmflächen 15 gedrückt sind. Im Unterschied zu Fig. 5 ist hier lediglich noch keine Folienbahn 1 eingelegt.

In der nachfolgenden, in Fig. 7 gezeigten Phase ist die Folientransportplatte 10 soweit in Richtung des Pfeiles 8 nach vorne transportiert worden, dass die Betätigungsfortsätze 20 mit ihren Anlaufrollen 22 in die Kulissen 23 eingelaufen sind und von den Kulissen 23 geführt werden. Die Anlaufrollen 22 rollen dabei auf den Flächen der Kulissen 23 ab, folgen deren Form und erzeugen auf diese Weise eine insbesondere im Zusammenhang mit Fig. 4 beschriebene Schwenkbewegung der Klemmbacken 19. Die Kulissen 23 weisen jeweils zumindest einen Öffnungsabschnitt 24 und optional auch jeweils einen Schließabschnitt 25 auf. Gemäß Fig. 7 drückt der Öffnungsabschnitt 24 über die darauf abrollenden Anlaufrollen 22 die Betätigungsfortsätze 20 nach unten, wodurch die Klemmbacken 19 entgegen dem Pfeil 29 (Fig. 4) und entgegen den von den Haltemagneten 16 und den Schließfedern 18 erzeugten Haltekräften nach oben geschwenkt und damit geöffnet werden. In diesem geöffneten Zustand nach Fig. 7 kann die Folienbahn 1 gemäß den Figuren 1 und 3 eingelegt werden.

Nachdem dies geschehen ist, werden die Klemmbacken 19 wieder geschlossen, um die Folienbahn 1 gemäß Fig. 5 an ihren Randabschnitten 28 zu klemmen und zu halten. Hierzu kann es ausreichen, dass die Folientransportplatte 10 mit ihren Betätigungsfortsätzen 20 nach hinten aus den Kulissen 23 herausfährt, wobei dann die Schließfedern 18 den Vorgang des Schließens gemäß Fig. 4 herbeiführen. Falls die Vorspannkraft der Schließfedern 18 hierfür nicht ausreicht, oder falls auf die optionalen Schließfedern verzichtet wird, kommen die dann vorgesehenen Schließabschnitte 25 der Kulissen 23 gemäß Fig. 8 zum Einsatz. In diesem letzten Phasenbild ist die Folientransportplatte 10 soweit in Richtung des Pfeiles 8 nach vorne transportiert worden, dass die Betätigungsfortsätze 20 mit ihren Anlaufrollen 22 in die genannten Schließabschnitte 25 der Kulissen 23 eingelaufen sind und aufgrund des dort anzutreffenden ansteigenden Konturverlaufs angehoben werden. Das Anheben der Anlaufrollen 22 bewirkt eine schließende Schwenkbewegung der Klemmbacken 19, wie sie in Fig. 4 mit einem Pfeil 29 dargestellt ist. Die Schließbewegung wird durch die Schließabschnitte 25 der Kulissen 23 soweit zwangsgesteuert, bis die Haltemagnete 16 und optional auch die Saugöffnungen 17 und/oder die Schließfedern 18 ihre gewünschte Schließkraft entfalten. Die zuvor eingelegte Folienbahn 1 ist dann gemäß obiger Beschreibung und insbesondere gemäß der Darstellung nach Fig. 5 gehalten.

Nach Fertigstellung und Vereinzelung der Verpackungen in der Verpackungsmaschine nach Fig. 1 kann eine weitere Betätigungsvorrichtung gemäß den Figuren 6 bis 8 zum Einsatz kommen. Hier werden dann die nacheinander die Klemmbacken 19 geöffnet, die Reste der Folienbahn 1 entfernt, und die Klemmbacken 19 wieder geschlossen, so dass der vorstehend beschriebene Zyklus erneut beginnen kann.

## Patentansprüche

1. Folientransportplatte (10) zum Transport einer Folienbahn (1) durch Bearbeitungsstationen (4, 5, 6) einer Folienverpackungsmaschine, wobei die Folientransportplatte (10) zwei sich gegenüberliegenden Seitenränder (13, 14) und dazwischen mindestens eine Formmulde (12) zum Tiefziehen der Folienbahn (1) aufweist, und wobei an den beiden Seitenrändern (13, 14) Haltemittel für die Folienbahn angeordnet sind,
**dadurch gekennzeichnet, dass** die Haltemittel durch je eine feststehende Klemmfläche (15) und mindestens eine relativ zur Klemmfläche (15) bewegliche Klemmbacke (19) zum klemmenden Andrücken der Folienbahn (1) an die Klemmfläche (15) gebildet sind, wobei die Haltemittel des Weiteren jeweils mindestens einen Haltemagnet (16) zum Anziehen der Klemmbacke (19) gegen die Klemmfläche (15) sowie einen Betätigungsfortsatz (20) zum Abheben der Klemmbacke (19) von der Klemmfläche (15) aufweisen.

2. Folientransportplatte nach Anspruch 1,
**dadurch gekennzeichnet, dass** die Klemmbacken (19) um Schwenkachsen (21) schwenkbar gelagert sind, wobei die Schwenkachsen (21) parallel zu den Seitenrändern (13, 14) der Folientransportplatte (10) liegen.

3. Folientransportplatte nach Anspruch 1 oder 2,
**dadurch gekennzeichnet, dass** der Betätigungsfortsatz (20) mit einer Anlaufrolle (22) versehen ist.

4. Folientransportplatte nach einem der Ansprüche 1 bis 3,
**dadurch gekennzeichnet, dass** an jedem Seitenrand (13, 14) einer einzelnen Folientransportplatte (10) mehrere und insbesondere vier Klemmbacken (19) angeordnet sind.

5. Folientransportplatte nach einem der Ansprüche 1 bis 4,
**dadurch gekennzeichnet, dass** der mindestens eine Haltemagnet (16) in der Klemmfläche (15) positioniert ist.

6. Folientransportplatte nach einem der Ansprüche 1 bis 5,
**dadurch gekennzeichnet, dass** in der Klemmfläche (15) Saugöffnungen (17) zum Ansaugen der Folienbahn gegen die Klemmfläche ausgebildet sind.

7. Folientransportplatte nach einem der Ansprüche 1 bis 6,
**dadurch gekennzeichnet, dass** jeder Klemmbacke (19) mindestens eine Schließfeder (18) zugeordnet ist, wobei die Klemmbacke (19) mittels der Schließfeder (18) elastisch federnd gegen die Klemmfläche (15) gedrückt ist.

8. Folientransportsystem zum Transport einer Folienbahn (1) durch Bearbeitungsstationen (4, 5, 6) einer Folienverpackungsmaschine, umfassend umlaufend bewegte Folientransportplatten (10) nach einem der Ansprüche 1 bis 6 sowie feststehende, auf die Betätigungsfortsätze (20) der Klemmbacken (19) einwirkende Betätigungsmittel.

9. Folientransportsystem nach Anspruch 8,
**dadurch gekennzeichnet, dass** die Betätigungsmittel als die Betätigungsfortsätze (10) führende Kulisse (23) ausgebildet sind, wobei die Kulisse (23) zumindest einen die Klemmbacke (19) von der Klemmfläche (15) abhebenden Öffnungsabschnitt (24) umfasst.

10. Folientransportsystem nach Anspruch 9,
**dadurch gekennzeichnet, dass** die Kulisse (23) einen die Klemmbacke (19) auf die Klemmfläche (15) führenden Schließabschnitt (25) umfasst.

## Claims

1. Film transportation plate (10) for transporting a film web (1) through processing stations (4, 5, 6) of a film packaging machine, wherein the film transportation plate (10) has two opposite lateral edges (13, 14) and, therebetween, at least one mould impression (12) for thermoforming the film web (1), and wherein retaining means for the film web are arranged at the two lateral edges (13, 14), **characterized in that** the retaining means are each formed by a fixed clamping surface (15) and at least one clamping jaw (19), which is movable relative to the clamping surface (15), for pressing the film web (1) so as to clamp it against the clamping surface (15), wherein the retaining means also each have at least one retaining magnet (16) for attracting the clamping jaw (19) against the clamping surface (15), and an actuating extension (20) for lifting the clamping jaw (19) off the clamping surface (15).

2. Film transportation plate according to claim 1,
**characterized in that** the clamping jaws (19) are mounted so as to be pivotable about pivot axes (21), wherein the pivot axes (21) are parallel to the lateral edges (13, 14) of the film transportation plate (10).

3. Film transportation plate according to claim 1 or 2,
**characterized in that** the actuating extension (20) is provided with a run-on roller (22).

4. Film transportation plate according to one of claims 1 to 3,
**characterized in that** a plurality of and in particular four clamping jaws (19) are arranged on each lateral edge (13, 14) of an individual film transportation plate (10).

5. Film transportation plate according to one of claims 1 to 4,
**characterized in that** the at least one retaining magnet (16) is positioned in the clamping surface (15).

6. Film transportation plate according to one of claims 1 to 5,
**characterized in that** suction openings (17) for drawing the film web against the clamping surface are formed in the clamping surface (15).

7. Film transportation plate according to one of claims 1 to 6,
**characterized in that** each clamping jaw (19) is assigned at least one closing spring (18), wherein the clamping jaw (19) is pressed spring-elastically against the clamping surface (15) by means of the closing spring (18).

8. Film transportation system for transporting a film web (1) through processing stations (4, 5, 6) of a film packaging machine, comprising film transportation plates (10) according to one of claims 1 to 6 that are moved in circulation, and fixed actuating means that act on the actuating extensions (20) of the clamping jaws (19).

9. Film transportation system according to claim 8,
**characterized in that** the actuating means are in the form of a slotted guide (23) guiding the actuating extensions (10), wherein the slotted guide (23) comprises at least one opening portion (24) that lifts the clamping jaw (19) off the clamping surface (15).

10. Film transportation system according to claim 9,
**characterized in that** the slotted guide (23) comprises a closing portion (25) that guides the clamping jaw (19) onto the clamping surface (15).

## Revendications

1. Plaque de transport de film (10) pour le transport d'une bande de film (1) à travers des postes de traitement (4, 5, 6) d'une machine d'emballage sous film, la plaque de transport de film (10) présentant deux bords latéraux (13, 14) opposés et entre eux au moins une cavité de formage (12) pour l'emboutissage profond de la bande de film (1), et des moyens de maintien pour la bande de film étant agencés sur les deux bords latéraux (13, 14),
**caractérisée en ce que** les moyens de maintien sont formés chacun par une surface de serrage fixe (15) et au moins une mâchoire de serrage (19) mobile par rapport à la surface de serrage (15) pour presser par serrage la bande de film (1) contre la surface de serrage (15), les moyens de maintien présentant en outre chacun au moins un aimant de maintien (16) pour attirer la mâchoire de serrage (19) contre la surface de serrage (15) ainsi qu'un prolongement d'actionnement (20) pour soulever la mâchoire de serrage (19) de la surface de serrage (15).

2. Plaque de transport de film selon la revendication 1,
**caractérisée en ce que** les mâchoires de serrage (19) sont montées pivotantes autour d'axes de pivotement (21), les axes de pivotement (21) étant parallèles aux bords latéraux (13, 14) de la plaque de transport de film (10).

3. Plaque de transport de film selon la revendication 1 ou 2,
**caractérisée en ce que** le prolongement d'actionnement (20) est pourvu d'un rouleau de démarrage (22).

4. Plaque de transport de film selon l'une quelconque des revendications 1 à 3,
**caractérisée en ce que** plusieurs et notamment quatre mâchoires de serrage (19) sont agencées sur chaque bord latéral (13, 14) d'une plaque de transport de film (10) individuelle.

5. Plaque de transport de film selon l'une quelconque des revendications 1 à 4,
**caractérisée en ce que** l'au moins un aimant de maintien (16) est positionné dans la surface de serrage (15).

6. Plaque de transport de film selon l'une quelconque des revendications 1 à 5,
**caractérisée en ce que** des orifices d'aspiration (17) sont formés dans la surface de serrage (15) pour aspirer la bande de film contre la surface de serrage.

7. Plaque de transport de film selon l'une quelconque des revendications 1 à 6,
**caractérisée en ce qu'**au moins un ressort de fermeture (18) est associé à chaque mâchoire de serrage (19), la mâchoire de serrage (19) étant pressée élastiquement contre la surface de serrage (15) au moyen du ressort de fermeture (18).

8. Système de transport de film pour le transport d'une bande de film (1) à travers des postes de traitement (4, 5, 6) d'une machine d'emballage sous film, comprenant des plaques de transport de film (10) selon l'une quelconque des revendications 1 à 6 déplacées en circulation ainsi que des moyens d'actionnement fixes agissant sur les prolongements d'actionnement (20) des mâchoires de serrage (19).

9. Système de transport de film selon la revendication 8,
**caractérisé en ce que** les moyens d'actionnement sont réalisés sous forme de coulisse (23) guidant les prolongements d'actionnement (10), la coulisse (23) comprenant au moins une section d'ouverture (24) soulevant la mâchoire de serrage (19) de la surface de serrage (15).

10. Système de transport de film selon la revendication 9,
**caractérisé en ce que** la coulisse (23) comprend une section de fermeture (25) guidant la mâchoire de serrage (19) sur la surface de serrage (15).
